# EUROPÄISCHE PATENTANMELDUNG

(11) **EP 4 187 855 A1**
(43) Veröffentlichungstag der Anmeldung: **31.05.2023**
(21) Anmeldenummer: 21217033.6
(22) Anmeldetag: 22.12.2021
(51) Int. Cl.: H04L 12/18

(54) **COMPUTER-IMPLEMENTIERTES VIDEOKONFERENZ-VERFAHREN**

(30) Priorität: 25.11.2021 DE 102021130955
(71) Anmelder: eyeson GmbH, 8010 Graz (AT)
(72) Erfinder: KRÖPFL, Andreas, 8042 Graz (AT)
(74) Vertreter: Canzler & Bergmeier Patentanwälte Partnerschaft mbB

(57) **Zusammenfassung**

Es wird ein Computer-implementiertes Videokonferenz-Verfahren zum Übertragen von Informationen mittels der Streaming-Technologie vorgeschlagen. Das erfindungsgemäße Verfahren umfasst folgende Schritte: Empfangen von zumindest Audio- und Video-Strömen und vorzugsweise auch Daten-Strömen seitens eines als Software realisierten Konferenzservers (10), der diese Ströme zu einem ersten Einzelstrom (15) kombiniert; Übertragen des ersten Einzelstroms (15) zu einer KI-Schnittstelle (20) und an ein KI-Dienstleistungsprogramm (30a, 30b, 30c); Empfangen von Informationen (32) seitens der KI-Schnittstelle (20), wobei diese Informationen (32) durch Analyse des Inhalts des ersten Einzelstroms (15) seitens des mindestens einen KI-Dienstleistungsprogramms (30a, 30b, 30c) erzeugt werden und Weiterleiten dieser Informationen (32) seitens der KI-Schnittstelle (20) an den Konferenzserver (10); Einfügen dieser Informationen (33) oder eines Teils dieser Informationen (33) durch den Konferenzserver (10) in den ersten Einzelstrom (15), wodurch ein zweiter Einzelstrom (35) entsteht, und Senden des zweiten Einzelstroms (35) vom Konferenzserver (10) an die Teilnehmer-Endgeräte (40) der Videokonferenz.

## Beschreibung

Die Erfindung betrifft ein Computer-implementiertes Videokonferenz-Verfahren zum Übertragen von Informationen mittels der Streaming-Technologie.

Videokonferenzen sind einer der wichtigsten Dienste eines zukünftigen Arbeitsplatzes, der zu einem mobilen, aktivitätsbasierten virtuellen Arbeitsraum wird und ein Arbeiten ohne zeitliche, gerätespezifische oder räumliche Grenzen ermöglicht.

Während einer Videokonferenz werden insbesondere Sprach- und Bildinformationen in Echtzeit ausgetauscht. Der Echtzeit-Aspekt ist unterteilt in einen technischen Teil mit Grenzen in der Bildwiederholrate und einen menschlichen Teil mit Grenzen in der Geschwindigkeit von Präsentationen und Kommunikation mit Audio, Video und weiteren Daten. Anstelle des Begriffs "Audio" wird vorliegend auch der Begriff "Sprache" verwendet. Unter dem Begriff "Video" werden vorliegend bewegte Bilder verstanden, während unter dem Begriff "weitere Daten" (nachfolgend manchmal auch nur "Daten" genannt) Präsentationen u.Ä. zu verstehen sind.

Bei einer Videokonferenzsitzung mit mehreren Teilnehmern können eine oder mehrere Personen gleichzeitig sprechen, eine oder mehrere Personen werden gleichzeitig angezeigt und eine oder mehrere Personen können gleichzeitig eine visuelle Präsentation halten. Weitere Quellen mit Sprach-, Video- und Datenfunktionalität können hinzugefügt werden. Alle Informationskanäle mit den Inhalten Sprache, Video und weiteren Daten (wie Präsentationen) von Menschen oder anderen Quellen sind durch die oben genannte technische Bildwiederholrate des Videokommunikationsdienstes begrenzt. Eine Technologie, die sich aufgrund der Vorteile bei der Einfachheit und der Bildwiederholrate als besonders vorteilhaft erwiesen hat, ist die sog. Einzelstrom- bzw. Single-Stream-Technology der Anmelderin, s. EP 2 498 491 A1. Hierbei werden alle Audio-, Video- und weitere Daten-Ströme (z.B. Präsentationen) von einem Konferenzserver in einem einzigen Einzelstrom zusammengefasst und in dieser Form an alle Teilnehmer der Videokonferenz übertragen.

Auf Basis des oben Gesagten sind bei einer Videokonferenz insbesondere folgende Ströme von Interesse:
1 0 bis N Teilnehmer mit Sprache (z.B. Call-In Service)
2 0 bis M Teilnehmer mit Video (z.B. Client mit Webcam)
3 0 bis O Teilnehmer mit weiteren Daten wie beispielsweise Präsentationen (z.B. Powerpoint Screencasting)
4 0 bis I andere Quellen mit Sprache (z.B. Podcast)
5 0 bis J andere Quellen mit Video (z.B. IP-Überwachungskamera)
6 0 bis K andere Quellen mit weiteren Daten (z.B. loT-Datenquelle; IoT: Internet of Things)

N, M, O können der gleiche Wert sein; sie können aber auch unterschiedlich sein. Dies gilt auch für I, J, K, die denselben Wert haben können, aber auch unterschiedlich sein können.

Einige oder alle der genannten Ströme 1-6 der vorzugsweise über jeweils einen eigenen Kanal zum Konferenzserver übertragenen Informationen werden von dem Konferenzserver zu einem Einzelstrom (Single Stream) mit Audio-, Video- und ggf. weiteren Daten (beispielsweise Präsentationen) kombiniert.

Aufgrund ihrer immensen Bedeutung für die Arbeitswelt ist es Bedürfnis und Anforderung, verbesserte und benutzerfreundlichere Videokonferenzsysteme und Verfahren zur Durchführung von Videokonferenzen zur Verfügung zu stellen. Dies ist auch die Aufgabe der vorliegenden Erfindung, wobei vorliegend die Einzelstrom-Technologie Verwendung finden soll.

Diese Aufgabe wird gelöst durch die Merkmale der unabhängigen Ansprüche.

Gemäß der Erfindung wird ein Computer-implementiertes Videokonferenz-Verfahren zum Übertragen von Informationen mittels der Single-Stream-Technologie vorgestellt, das eine als Software realisierte KI-Schnittstelle (KI: Künstliche Intelligenz) verwendet. Entsprechend dem erfindungsgemäßen Verfahren wird ein erster Einzelstrom, der von einem Konferenzserver aus Audio- und Video-Strömen (im Folgenden auch zuweilen A/V-Ströme genannt) und ggf. weiteren Datenströmen zu einem einzigen Einzelstrom kombiniert wurde, der KI-Schnittstelle zur Verfügung gestellt. Diese Übermittlung kann beispielsweise mit einer Echtzeit-Bildwiederholrate von 30 Bildern pro Sekunde oder weniger erfolgen, wobei der Konferenzserver die Audio- und die Video-Informationen zweckmäßigerweise miteinander synchronisiert, bevor er sie an die KI-Schnittstelle weiterleitet. Die KI-Schnittstelle leitet diesen ersten Einzelstrom oder einen Teil dieses ersten Einzelstroms zu einem oder mehreren als Software realisierten KI-Dienstleistungsprogrammen, welche Informationen aus dem Einzelstrom oder dem besagten Teil des Einzelstroms verwerten und nach deren Verarbeitung an die KI-Schnittstelle zurücksenden. Die KI-Schnittstelle leitet diese Informationen oder einen Teil dieser Informationen an den Konferenzserver weiter. Der Konferenzserver fügt diese weitergeleiteten Informationen in den ersten Einzelstrom ein, wodurch ein zweiter Einzelstrom entsteht, der an die Teilnehmer der Videokonferenz übermittelt wird.

Die Vorteile der Erfindung sind insbesondere darin zu sehen, dass mittels der Zwischenschaltung der KI-Schnittstelle sowie des mindestens einen KI-Dienstleistungsprogramms der von dem Konferenzserver an die Teilnehmer übermittelte Einzelstrom (vorliegend "zweiter Einzelstrom" genannt) verschiedenste zusätzliche Informationen erhalten kann, welche die Effizienz und/oder Qualität der Videokonferenz verbessern helfen. Alle Teilnehmer erhalten hierbei dieselben Informationen auf Basis der durch das mindestens eine KI-Dienstleistungsprogramm zur Verfügung gestellten Informationen, da es nur einen einzigen zweiten Einzelstrom gibt und alle Daten in Echtzeit oder Fast-Echtzeit (Verzögerung von maximal wenigen Sekunden) übertragen werden.

Die KI-Schnittstelle hat erfindungsgemäß zwei Funktionen:
1. Senden des ersten Einzelstroms oder eines Teils davon an mindestens ein KI-Dienstleistungsprogramm, welches Audio und/oder Video-Informationen und/oder weitere Daten in dem ersten Einzelstrom oder einem Teil davon erkennt und verarbeitet;
2. Empfangen der Informationen, die aus der Verarbeitung seitens des mindestens einen KI-Dienstleistungsprogramms resultieren, um diese Informationen oder daraus abgeleitete Informationen oder einen jeweiligen Teil davon an den Konferenzserver zurückzuübermitteln, damit der erste Einzelstrom mit diesen weiteren Informationen ergänzt wird und der resultierende zweite Einzelstrom an alle Teilnehmer verteilt wird.

Vorzugsweise manipuliert die KI-Schnittstelle nicht den ersten Einzelstrom oder Teile davon, bevor sie den ersten Einzelstrom oder Teile davon an das mindestens eine KI-Dienstleistungsprogramm weiterleitet. Dementsprechend leitet die KI-Schnittstelle bevorzugt den ersten Einzelstrom in seiner Gesamtheit an das mindestens eine KI-Dienstleistungsprogramm oder extrahiert Bestandteile des ersten Datenstroms zur Weiterleitung an das mindestens eine KI-Dienstleistungsprogramm. Unter "Extraktion" wird hierbei ein Kopieren von bestimmten Informationen aus dem Einzelstrom verstanden, so dass der erste Einzelstrom zunächst unverändert bleibt. Außer dieser Extraktion findet vorzugsweise keine Bearbeitung des ersten Einzelstroms statt. Alternativ ist aber auch seitens der KI-Schnittstelle eine Bearbeitung bzw. Manipulation des ersten Einzelstroms vor einer Übermittlung an das mindestens eine KI-Dienstleistungsprogramm möglich, wobei bevorzugt diese bearbeiteten Teile des ersten Einzelstroms an das mindestens eine KI-Dienstleistungsprogramm gesendet werden.

Das mindestens eine KI-Dienstleistungsprogramm führt vorzugsweise eine oder mehrere der folgenden Aktionen auf Basis des ihr von der KI-Schnittstelle zur Verfügung gestellten ersten Einzelstroms bzw. Teilen davon durch, um nachfolgend entsprechend erzeugte Informationen an die KI-Schnittstelle zu schicken:
a) Transkribieren von Sprachinhalten im ersten Einzelstrom;
b) automatisches Erstellen von Notizen aus Sprachinhalten im ersten Einzelstrom;
c) Erkennen von Objekten aus Videos oder Präsentationen im ersten Einzelstrom, vorzugsweise auch deren Interpretation oder Transkription;
d) Strukturieren von Informationen und Indizieren einer im ersten Einzelstrom enthaltenen Videokonferenz;
e) Erkennen und Schwärzen von Inhalten im ersten Einzelstrom, welche die Privatsphäre oder Sicherheitsvorschriften betreffen;
f) Abrufen von Informationen einer Gesichtserkennung aus Videos im ersten Einzelstrom, einschließlich Informationen über einen Sprecher;
g) Erkennen und Transkribieren von strukturierten Daten im ersten Einzelstrom, wie URL oder E-Mail-Adressen, und vorzugsweise Transkribieren dieser Daten in Text, Adressbucheinträge, Vorschauen von Websites oder andere Aktionen;
h) Erkennen von Zitaten in einer Präsentation im ersten Einzelstrom und Bereitstellen der URL für dieses Zitat als Text und/oder Anzeigen einer Vorschau des zitierten Dokuments;
i) Erkennen von Terminen im ersten Einzelstrom und Umwandlung in ein maschinenverarbeitbares Format;
j) Erkennen und Interpretieren von Wörtern im ersten Einzelstrom und Auslösen entsprechender vordefinierter Aktionen;
k) Feedback-Geben zur Verbesserung der Einstellung von die Qualität der Videokonferenz im ersten Einzelstrom bestimmenden Parametern bei den einzelnen Teilnehmern, wie beispielsweise Kontrast, Hintergrund, Farben, Beleuchtung, Tonqualität;
l) Erkennen von Aufmerksamkeit oder Emotionen durch Gesichtserkennung in Videos im ersten Einzelstrom und Bereitstellung von entsprechendem Feedback, z.B. hinsichtlich der Aufmerksamkeit der Teilnehmer für den Sprecher;
m) Erkennen des aktiven Sprechers in der Videokonferenz des ersten Einzelstroms und Bereitstellung von Statistiken über dessen Sprechzeiten;
n) Sammeln und Analysieren von Daten im ersten Einzelstrom zur dynamischen Verbesserung der Bandbreiteneffizienz.

Ein konkretes diesbezügliches Anwendungsbeispiel ist ein als Spracherkennungssoftware ausgebildetes KI-Dienstleistungsprogramm wie z.B. eines der bekannten Programme Alexa (Microsoft) oder Siri (Apple). Ein vergleichsweise einfaches KI-Dienstleistungsprogramm zur Verarbeitung von Videoinhalten im ersten Einzelstrom ist beispielsweise eine Link-Erkennung mittels bekannter Anwendungsprogramme zur Identifizierung von Weblinks oder URLs (Uniform Resource Locator), um beispielsweise eine Vorschau der entsprechenden Webseite und weitergehende Informationen (beispielsweise durch Extraktion aus Wikipedia) an die KI-Schnittstelle zurückzuschicken.

Besonders bevorzugt umfassen die Informationen, die von dem mindestens einen KI-Dienstleistungsprogramm auf Grundlage des ersten Einzelstroms erzeugt und der KI-Schnittstelle zur Verfügung gestellt werden, Daten (darunter auch vorzugsweise Metadaten), Ergebnisse von Analysen und/oder auszuführende Aktionen, die auf einer Analyse des Inhalts des ersten Einzelstroms oder eines Teils von diesem beruhen. Es sei hierzu angemerkt, dass eine allgemein gültige Trennlinie zwischen Daten und Metadaten nicht existiert. Generell sind Metadaten (auch Metainformationen genannt) strukturierte Daten, die Informationen über Merkmale anderer Daten enthalten.

Vorzugsweise erzeugt bzw. generiert oder auch extrahiert die KI-Schnittstelle selbst Daten (einschl. Metadaten) aus den von dem mindestens einen KI-Dienstleistungsprogramm erhaltenen Informationen und leitet diese an den Konferenzserver zum Erstellen des zweiten Einzelstroms und/oder an eine als Software realisierte Anwendung weiter. Derartige Daten sind beispielsweise:
a) Zeitstempel, an welcher Stelle die besagten Informationen vom Konferenzserver in den ersten Einzelstrom einzufügen sind;
b) Position und Größe der vom Konferenzserver in den ersten Einzelstrom einzufügenden Informationen;
c) Dauer und Zeitfenster der vom Konferenzserver in den ersten Einzelstrom einzufügenden Informationen, beispielsweise die Dauer einer Visualisierung der in den ersten Einzelstrom einzufügenden Informationen;
d) Text oder Metadaten, beispielsweise ein Weblink, der vom Konferenzserver in den ersten Einzelstrom einzufügenden Informationen;
e) Bild der vom Konferenzserver in den ersten Einzelstrom einzufügenden Informationen, beispielsweise als URL oder Stream;
f) Sprachdaten der vom Konferenzserver in den ersten Einzelstrom einzufügenden Informationen, beispielsweise als URL oder Stream;
g) Angabe, ob die vom Konferenzserver in den ersten Einzelstrom einzufügenden Informationen sichtbar sind oder nicht, Letzteres beispielsweise für den Fall einer Aufzeichnung dieser Informationen.

Gemäß einer vorteilhaften Ausführungsform erzeugt die KI-Schnittstelle auf Grundlage der Daten eine oder mehrere visuelle Darstellungen und/oder eine oder mehrere Sprachnachrichten, die nach Einfügung in den ersten Einzelstrom seitens des Konferenzservers in Form des zweiten Einzelstroms an alle Teilnehmer-Endgeräte (beispielsweise Mobilgeräte, Computer, ...) gesendet und dort ausgegeben wird.

Es ist in bestimmten Fällen sinnvoll oder für eine Anwendung eines oder mehrerer der KI-Dienstleistungsprogramme sogar notwendig, dass der Konferenzserver zusätzlich zu dem ersten Einzelstrom Zusatzinformationen an die KI-Schnittstelle übermittelt. Die KI-Schnittstelle sendet in einem solchen Fall diese Zusatzinformationen bevorzugt an mindestens eines der KI-Dienstleistungsprogramme, wo die Zusatzinformationen im Zusammenhang mit Informationen aus dem ersten Einzelstrom verarbeitet werden. Eine solche Zusatzinformation ist beispielsweise der Name oder die Identifikation aller Teilnehmer oder des gerade aktiven/sprechenden Teilnehmers. Diese individuelle Information kann von einem KI-Dienstleistungsprogramm mit einer Information aus dem ersten Einzelstrom verknüpft werden (beispielsweise zum Erstellen von Statistiken über aktive Redezeiten oder zur Verifizierung von Identitäten durch Abgleich der Zusatzinformation mit Informationen aus Datenbanken) und die daraus resultierenden Informationen an die KI-Schnittstelle zurückgeschickt werden, um sie dann an den Konferenzserver weiterzuleiten. Der Konferenzserver baut dann diese resultierenden Informationen (oder aus ihnen abgeleitete Informationen) in den zweiten Einzelstrom ein, wobei die resultierenden Informationen beispielsweise als zusätzliche Video-Ebene über die Videokonferenzdarstellung eingeblendet werden.

Von den Informationen, welche das mindestens eine KI-Dienstleistungsprogramm an die KI-Schnittstelle sendet, können von der KI-Schnittstelle auch einzelne Informationen mindestens einer anderen, als Software realisierten Anwendung zur Verfügung gestellt werden. Hierbei kommen beispielsweise Chatprogramme, Agenda-Planer, Kalender und/oder Adressbücher in Frage. Zum Beispiel werden auf Basis von dem mindestens einen KI-Dienstleistungsprogramm zur Verfügung gestellten Informationen auf Veranlassung der KI-Schnittstelle nur für einen oder mehrere Teilnehmer relevante Termine in deren elektronischen Kalender eingetragen, während die anderen Teilnehmer diese Informationen nicht auf diese Weise erhalten und dementsprechend auch keine Eintragung in deren elektronischen Kalender erfolgt. Das mindestens eine KI-Dienstleistungsprogramm ist hierbei beispielsweise derart ausgebildet, dass es zum Beispiel aus Sprachinhalten im ersten Einzelstrom automatisch Nachrichten erzeugt oder Erinnerungen erstellt, welche an die KI-Schnittstelle übermittelt werden, wobei die KI-Schnittstelle diese Nachrichten oder Erinnerungen dann an eine oder mehrere entsprechende Empfänger oder an Gruppen von Empfängern verteilt.

Die von dem mindestens einen KI-Dienstleistungsprogramm an die KI-Schnittstelle gesendeten Informationen sind vorzugsweise ganz oder teilweise für die den zweiten Einzelstrom vom Konferenzserver empfangenden Teilnehmer sichtbar, teilweise sichtbar und teilweise versteckt oder ganz versteckt. Die beiden letzteren Alternativen bieten sich insbesondere zu Aufnahme- und/oder Suchzwecken an. In diesem Fall müssen die Teilnehmer die Informationen nicht sehen oder hören bzw. würden sogar die Teilnehmer mit nicht unmittelbar von ihnen benötigten Informationen gestört werden.

Besonders bevorzugt veranlasst die KI-Schnittstelle über entsprechende Software-Befehle, ob und wie besagte Informationen vom Konferenzserver in den ersten Einzelstrom eingefügt und/oder an mindestens ein anderes Dienstleistungsprogramm, wie beispielsweise Chatprogramme und Kalender, gesendet werden.

Das erfindungsgemäße Verfahren umfasst vorzugsweise neben den im Anspruch 1 aufgeführten Verfahrensschritten, die am Konferenzserver und der KI-Schnittstelle durchgeführt werden, auch diejenigen Verfahrensschritte, die an dem mindestens einen KI-Dienstleistungsprogramm durchgeführt werden.

Die Erfindung umfasst ebenfalls ein Videokonferenzsystem mit mindestens einer Recheneinheit, die ausgebildet ist, ein Computer-implementiertes Verfahren wie vorbeschrieben durchzuführen.

Weiterhin wird erfindungsgemäß ein Computerprogramm vorgeschlagen, das bei Ausführung durch eine Recheneinheit diese veranlasst, zumindest einen Teil der Verfahrensschritte eines Computer-implementierten Videokonferenz-Verfahrens gemäß einem oder mehreren der vorherigen Ansprüche auszuführen.

Auch wird erfindungsgemäß ein Computer-lesbares Speichermedium vorgeschlagen, umfassend ein Computerprogramm, das bei Ausführung durch eine Recheneinheit diese veranlasst, zumindest einen Teil der Verfahrensschritte eines Computer-implementierten Videokonferenz-Verfahrens gemäß einem oder mehreren der vorherigen Ansprüche auszuführen.

Vorteilhafte Weiterbildungen der Erfindung sind durch die Merkmale der Unteransprüche gekennzeichnet.

Nachfolgend wird die Erfindung anhand von Figuren näher erläutert. Es zeigen:
- **Fig. 1**: ein schematisches Ablaufdiagramm zur Darstellung des Erzeugens eines ersten Einzelstroms bei einer Videokonferenz mittels eines Konferenzservers und des Weiterleitens an eine KI-Schnittstelle; und
- **Fig. 2**: die Interaktion zwischen der KI-Schnittstelle und mehreren KI-Dienstleistungsprogrammen sowie das Senden eines zweiten Einzelstroms über den Konferenzserver an die Teilnehmer der Videokonferenz.

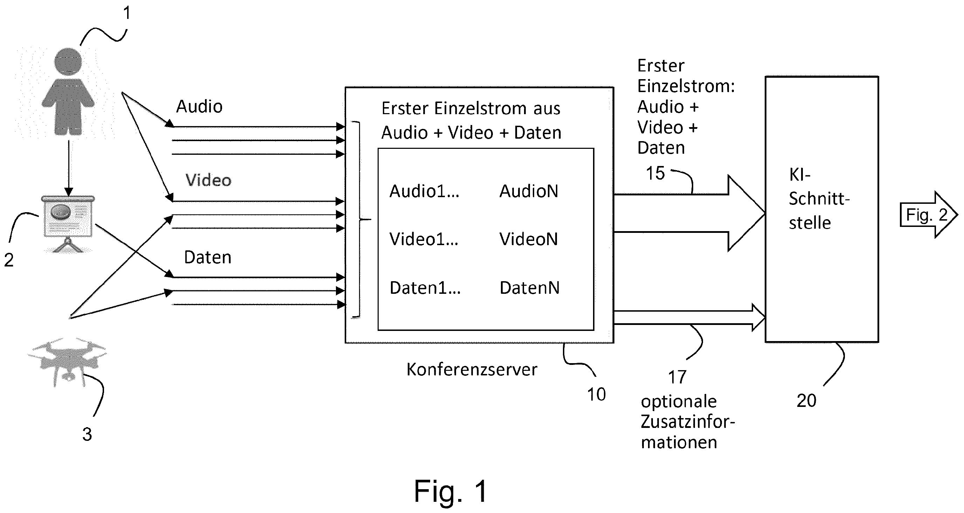

In der Fig. 1 ist schematisch dargestellt, dass ein als Software realisierter Konferenzserver 10 Audio-, Video- und weitere Daten von mehreren Quellen 1, 2, 3 erhält. Vorliegend ist ein symbolisch wiedergegebener Teilnehmer 1 (einer von vielen) einer Videokonferenz dargestellt, von dessen Endgerät Audio- und Video-Informationen an den Konferenzserver 10 gesendet werden. Auch ist eine Präsentationsleinwand 2 gezeigt, die symbolisch für eine Übertragung von Daten an den Konferenzserver 10 im Rahmen einer Präsentation steht, die der Teilnehmer 1 gibt (s. Pfeil von Teilnehmer 1 auf die Präsentationsleinwand 2). Weiterhin ist beispielhaft eine Drohne 3 dargestellt, die Video-Informationen und weitere Daten an den Konferenzserver 10 sendet. Es ist ohne weiteres möglich, dass mehrere Teilnehmer 1 sowie mehrere Quellen für die Übertragung von entsprechenden Audio-, Video- und/oder weiteren Daten-Strömen (symbolisiert durch die Präsentationsleinwand 2 und die Drohne 3) vorgesehen sind und entsprechende Informationen an den Konferenzserver 10 übermitteln.

Der Konferenzserver 10 kombiniert die Audio-, Video- und weitere Daten-Ströme (symbolisiert in Fig. 1 mit "Audio1 ... DatenN") zu einem ersten Einzelstrom 15, und übermittelt diesen an eine als Software realisierte KI-Schnittstelle 20 (KI: Künstliche Intelligenz).

In der Fig. 1 ist des Weiteren eine optionale Datenübermittlung von Zusatzinformationen 17 vom Konferenzserver 10 zur KI-Schnittstelle 20 dargestellt, die in bestimmten Anwendungsfällen nützlich oder sogar notwendig sein kann. Solche Zusatzinformationen 17 betreffen beispielsweise den Namen eines bestimmten Teilnehmers, der an einer bestimmten Stelle auf dem Bildschirm aller Teilnehmer zu sehen sein soll. Wenn beispielsweise die Namen aller Teilnehmer unter ihrem jeweiligen Bild bzw. Video auf dem Bildschirm jedes Teilnehmers erscheinen sollen, bietet es sich an, für jeden Namen eine eigene Zusatzinformation 17 an die KI-Schnittstelle 20 zu schicken (zur weiteren Verarbeitung dieser Informationen siehe weiter unten).

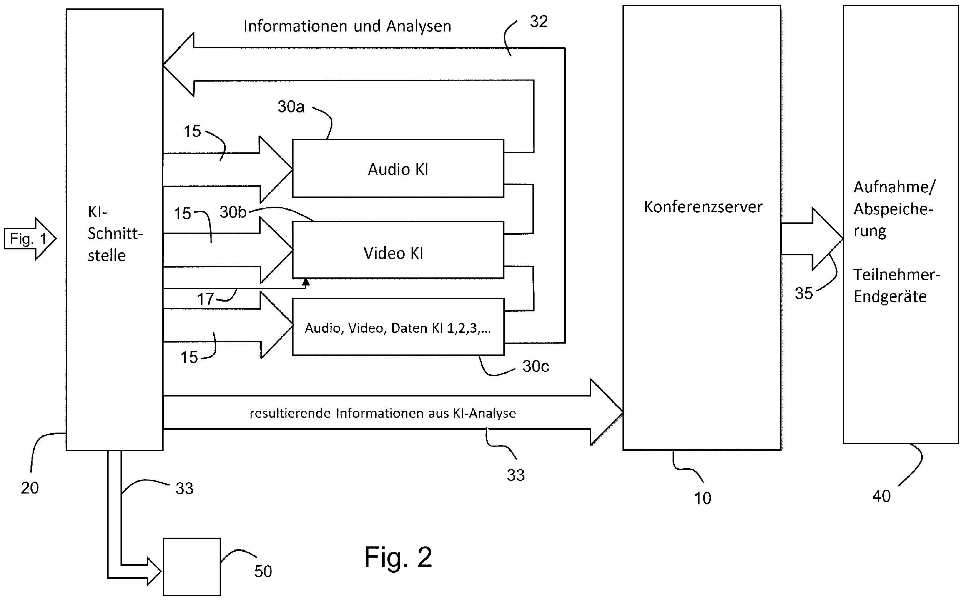

Wie in Fig. 2 dargestellt, sendet die KI-Schnittstelle 20 den ersten Einzelstrom 15 - nach Empfang dieses ersten Einzelstrom 15 entsprechend der Fig. 1 (s. entsprechend markierten Pfeil am rechten Rand von Fig. 1 und am linken Rand von Fig. 2) - an vorliegend drei verschiedene als Software realisierte KI-Dienstleistungsprogramme 30a, 30b, 30c, die bestimmte Informationen aus dem ersten Einzelstrom 15 verarbeiten. Beispielsweise verarbeitet das mit "Audio KI" bezeichnete KI-Dienstleistungsprogramm 30a bestimmte Sprachelemente des ersten Einzelstroms 15 und transkribiert diese, um einen entsprechenden Text zu erzeugen. Auch die automatische Erstellung von schriftlichen Notizen aus Audio-Informationen im ersten Einzelstrom 15 ist denkbar. Beispielsweise kann das KI-Dienstleistungsprogramm 30a in Form einer Spracherkennungssoftware (z.B. "Alexa" oder "Siri") ausgebildet sein oder ein solches integriert haben.

Das mit "Video KI" bezeichnete KI-Dienstleistungsprogramm 30b erkennt beispielsweise ein bildliches Objekt aus einem Video oder einer Präsentation im ersten Einzelstrom 15 und erstellt schriftliche Informationen zu diesem Objekt und/oder einen Web-Link, der Informationen zu diesem Objekt enthält, beispielsweise einen entsprechenden Wikipedia-Link.

Ein mit "Audio, Video, Daten KI 1, 2, 3,..." in Fig. 2 bezeichnetes KI-Dienstleistungsprogramm 30c steht für weitere verschiedene KI-Dienstleistungsprogramme, welche unterschiedlichste Funktionen übernehmen können, beispielsweise -jeweils durch Analyse des ersten Einzelstroms 15 - das Erkennen des aktiven Sprechers in der Videokonferenz und die Bereitstellung von Statistiken über dessen Sprechzeiten.

Generell können KI-Dienstleistungsprogramme Metadaten, also strukturierte Daten mit Informationen über Merkmale anderer Daten, nach Analyse des ersten Einzelstroms 15 erzeugen und an die KI-Schnittstelle 20 senden.

In der Fig. 2 ist ebenfalls dargestellt, dass die KI-Dienstleistungsprogramme 30a, 30b, 30c die Ergebnisse der Verarbeitung von Informationen im ersten Einzelstrom 15 an die KI-Schnittstelle 20 als Informationen 32 zurücksenden. Die KI-Schnittstelle 20 leitet - bevorzugt nach Weiterverarbeitung in der KI-Schnittstelle 20 durch Daten-Extraktion aus den Informationen 32 oder Generierung daraus abgeleiteter Daten - alle die aus den KI-Dienstleistungsprogrammen letztendlich resultierenden Informationen 33 oder Teile dieser Informationen an den Konferenzserver 10 weiter, der diese mit dem ersten Einzelstrom 15 kombiniert und nun mit dem als "zweiten Einzelstrom 35" bezeichneten Einzelstrom an die Teilnehmer-Endgeräte 40 und ggf. an Geräte zur Abspeicherung (auch hier im Bezugszeichen 40 inkludiert) dieses zweiten Einzelstroms 35 weiterleitet. Der Konferenzserver 10 erhält hierbei lediglich die Informationen 33 von der KI-Schnittstelle 20 und verarbeitet diesen mit dem ersten Einzelstrom 15, welcher der Konferenzserver 10 zuvor von den Quellen 1, 2, 3 erhalten hatte.

Somit erhalten alle Teilnehmer der Videokonferenz dieselben Informationen auf Basis der durch das mindestens eine KI-Dienstleistungsprogramm 30a, 30b, 30c zur Verfügung gestellten Informationen, da es nur einen einzigen zweiten Einzelstrom 35 gibt und alle Daten in Echtzeit oder Fast-Echtzeit (Verzögerung von maximal wenigen Sekunden) übertragen werden. Durch die Zwischenschaltung der KI-Schnittstelle 20 mitsamt den KI-Dienstleistungsprogrammen 30a, 30b, 30c erhält der vom Konferenzserver 10 an die Teilnehmer übermittelte zweite Einzelstrom 35 verschiedenste zusätzliche Funktionalitäten, mit denen die Effizienz und/oder die Qualität der Videokonferenz verbessert werden kann.

Erwähnt sei noch, dass ein KI-Dienstleistungsprogramm vorgesehen sein kann, das den ersten Einzelstrom 15 im Hinblick auf beispielsweise Möglichkeiten zur dynamischen Verbesserung der Bandbreiteneffizienz des Einzelstroms analysiert. Die entsprechenden ausgewerteten Informationen 32 werden dann ebenfalls an die KI-Schnittstelle 20 gesendet und anschließend in die an den Konferenzserver 10 zu übermittelnden Informationen 33 eingebunden, damit der Konferenzserver 10 beispielsweise eine entsprechend angepasste Bandbreiten-optimierte Übermittlung des zweiten Einzelstrom 35 vornehmen kann.

Vorzugsweise ist die KI-Schnittstelle 20 insbesondere dazu ausgebildet, Daten (einschließlich Metadaten) aus den von dem mindestens einen KI-Dienstleistungsprogramm 30a, 30b, 30c erhaltenen Informationen zu erstellen und, ggf. nach Weiterverarbeitung in der KI-Schnittstelle 20, an den Konferenzserver 10 in Form der Informationen 33 zu übermitteln. Diese Daten können insbesondere Metadaten mit beispielsweise folgenden Informationen sein: ein Zeitstempel, an welcher Stelle die vorgenannten Informationen in den ersten Einzelstrom 15 einzufügen sind; die Position und Größe der vom Konferenzserver in den ersten Einzelstrom 15 einzufügenden Informationen; die Dauer und das Zeitfenster der in den ersten Einzelstrom 15 einzufügenden Informationen; ein Weblink zu den in den ersten Einzelstrom 15 einzufügenden Informationen; ein Bild der in den ersten Einzelstrom 15 einzufügenden Informationen, beispielsweise als URL oder Stream; eine Sprachausgabe der in den ersten Einzelstrom 15 einzufügenden Informationen, beispielsweise als URL oder Stream, usw.

In der Fig. 2 ist weiterhin dargestellt, dass die Zusatzinformationen 17 (s. Fig. 1) von der KI-Schnittstelle 20 - welche die Zusatzinformationen 17 vorzugsweise nicht selbst weiterverarbeitet - beispielhaft an das KI-Dienstleistungsprogramm 30b weitergeleitet werden (in der Regel werden die Zusatzinformationen 17 an alle KI-Dienstleistungsprogramme übermittelt). Entsprechend dem Beispiel in Fig. 2 wertet das KI-Dienstleistungsprogramm 30b die Zusatzinformationen 17 (beispielsweise der Name eines bestimmten Teilnehmers, s.o.) im Zusammenhang mit Informationen aus dem ersten Einzelstrom 15 aus und sendet das Auswerteergebnis als Information 32 an die KI-Schnittstelle 20 zurück. Die KI-Schnittstelle 20 schließt dann das Auswerteergebnis in die aus der KI-Analyse resultierenden Informationen 33 ein, welche an den Konferenzserver 10 zum Einbau in den zweiten Einzelstrom 35 übermittelt werden. Beispielsweise werden dann die aus der Auswertung der zusätzlichen Informationen resultierenden Informationen über die Darstellung der Teilnehmer gelegt bzw. eingeblendet. In einem spezifischen Anwendungsfall werden beispielsweise deren Namen unter ihrem jeweiligen Bild sowie ihre jeweiligen Sprechanteile, beispielsweise in Form einer Grafik, eingeblendet.

Des Weiteren ist in der Fig. 2 eine weitere optionale Funktionalität der KI-Schnittstelle 20 dargestellt. Von einem oder mehreren der KI-Dienstleistungsprogramme 30a, 30b, 30c erstellte Informationen 32, die an die KI-Schnittstelle 20 übermittelt werden, können anschließend von der KI-Schnittstelle 20, vorzugsweise nach ihrer Weiterverarbeitung, in Form von Informationen 33 einer als Software realisierten Anwendung 50 zur Verfügung gestellt werden. Eine solche Anwendung kann beispielsweise ein Chatprogramm, eine Agenda, ein Kalender und/oder ein Adressbuch sein. Hierbei werden diese Informationen also außerhalb des zweiten Einzelstroms 35 nur einzelnen Teilnehmern (bzw. den Anwendungen auf deren elektronischen Geräten) zur Verfügung gestellt.

Die KI-Schnittstelle 20 veranlasst hierbei, ob und wie besagte Informationen an den Konferenzserver 10 und ggf. an eine besagte Anwendung 50 gesendet werden.

Die Erfindung wurde anhand eines Ausführungsbeispiels erläutert. Abwandlungen im Rahmen der Ansprüche sind ohne weiteres möglich. So ist es beispielsweise möglich, dass die KI-Schnittstelle 20 den Einzelstrom 15 zunächst analysiert und dann nur Teile des ersten Einzelstroms 15 an die KI-Dienstleistungsprogramme 30a, 30b, 30c übermittelt. Auch ist es möglich, dass die KI-Schnittstelle 20 nach Erhalt der 32 Informationen der KI-Dienstleistungsprogramme 30a, 30b, 30c nur einen Teil dieser, ggf. weiterverarbeiteten, Informationen 33 an den Konferenzserver 10 weiterleitet.

## Patentansprüche

1. Computer-implementiertes Videokonferenz-Verfahren zum Übertragen von Informationen mittels der Streaming-Technologie, umfassend folgende Schritte:
- Empfangen von zumindest Audio- und Video-Strömen und vorzugsweise auch Daten-Strömen von einer Mehrzahl von Teilnehmer-Endgeräten (40) einer Videokonferenz und ggf. auch anderen Quellen seitens eines als Software realisierten Konferenzservers (10), der diese Audio-, Video- und ggf. Daten-Ströme zu einem ersten Einzelstrom (15) kombiniert;
- Übertragen des besagten ersten Einzelstroms (15) zu einer als Software realisierten KI-Schnittstelle (20);
- Weiterleiten des ersten Einzelstroms (15) oder eines Teils des ersten Einzelstroms (15) seitens der KI-Schnittstelle (20) an mindestens ein als Software realisiertes KI-Dienstleistungsprogramm (30a, 30b, 30c);
- Empfangen von Informationen (32) in elektronischer Form seitens der KI-Schnittstelle (20), wobei diese Informationen (32) seitens des mindestens einen KI-Dienstleistungsprogramms (30a, 30b, 30c) zur Verfügung gestellt werden, wobei diese Informationen (32) durch Analyse des Inhalts des besagten ersten Einzelstroms (15) oder des besagten Teils des ersten Einzelstroms (15) seitens des mindestens einen KI-Dienstleistungsprogramms (30a, 30b, 30c) erzeugt werden;
- Weiterleiten dieser Informationen (32) oder aus diesen Informationen abgeleiteten Informationen (33) oder eines Teils dieser Informationen (33) seitens der KI-Schnittstelle (20) an den Konferenzserver (10);
- Einfügen dieser Informationen (33) oder eines Teils dieser Informationen (33) durch den Konferenzserver (10) in den besagten ersten Einzelstrom (15), wodurch ein zweiter Einzelstrom (35) entsteht,
und
- Senden des besagten zweiten Einzelstroms (35) vom Konferenzserver (10) an die Teilnehmer-Endgeräte (40) der Videokonferenz.

2. Verfahren nach Anspruch 1, **dadurch gekennzeichnet, dass** die der KI-Schnittstelle (20) von dem mindestens einen KI-Dienstleistungsprogramm (30a, 30b, 30c) zur Verfügung gestellten Informationen (32) durch eine oder mehrere der folgenden, seitens des mindestens einen KI-Dienstleistungsprogramms (30a, 30b, 30c) durchgeführten Aktionen erhalten werden:
a) Transkribieren von Sprachinhalten im ersten Einzelstrom (15);
b) automatisches Erstellen von Notizen aus Sprachinhalten im ersten Einzelstrom (15);
c) Erkennen von Objekten aus Videos oder Präsentationen im ersten Einzelstrom (15), vorzugsweise auch deren Interpretation oder Transkription;
d) Strukturieren von Informationen und Indizieren einer im ersten Einzelstrom (15) enthaltenen Videokonferenz;
e) Erkennen und Schwärzen von Inhalten im ersten Einzelstrom (15), welche die Privatsphäre oder Sicherheitsvorschriften betreffen;
f) Abrufen von Informationen aus einer Gesichtserkennung aus Videos im ersten Einzelstrom (15), einschließlich Informationen über einen Sprecher;
g) Erkennen und Transkribieren von strukturierten Daten im ersten Einzelstrom (15), wie URL oder E-Mail-Adressen, und vorzugsweise Transkribieren dieser Daten in Text, Adressbucheinträge, Vorschauen von Websites oder andere Arten von Aktionen;
h) Erkennen von Zitaten in einer Präsentation im ersten Einzelstrom (15) und Bereitstellen der URL für dieses Zitat als Text und/oder Anzeigen einer Vorschau des zitierten Dokuments;
i) Erkennen von Terminen im ersten Einzelstrom (15) und Umwandlung in ein maschinenverarbeitbares Format;
j) Erkennen und Interpretieren von Wörtern im ersten Einzelstrom (15) und Auslösen entsprechender vordefinierter Aktionen;
k) Feedback-Geben zur Verbesserung der Einstellung von die Qualität der Videokonferenz im ersten Einzelstrom (15) bestimmenden Parametern bei den einzelnen Teilnehmern, wie beispielsweise Kontrast, Hintergrund, Farben, Beleuchtung, Tonqualität;
l) Erkennen von Aufmerksamkeit oder Emotionen durch Gesichtserkennung in Videos im ersten Einzelstrom (15) und Bereitstellung von entsprechendem Feedback, z.B. hinsichtlich und der Aufmerksamkeit der Teilnehmer für den Sprecher;
m) Erkennen des aktiven Sprechers in der Videokonferenz des ersten Einzelstroms (15) und Bereitstellung von Statistiken über dessen Sprechzeiten;
n) Sammeln und Analysieren von Informationen im ersten Einzelstrom (15) zur dynamischen Verbesserung der Bandbreiteneffizienz.

3. Verfahren nach Anspruch 1 oder 2, **dadurch gekennzeichnet, dass** die besagten Informationen (32), die von dem mindestens einen KI-Dienstleistungsprogramm (30a, 30b, 30c) zur KI-Schnittstelle (20) übermittelt werden, umfassen: Daten einschließlich Metadaten, Ergebnisse von Analysen und/oder auszuführende Aktionen, die auf einer Analyse des Inhalts des ersten Einzelstroms (15) beruhen.

4. Verfahren nach mindestens einem der vorhergehenden Ansprüche,
**dadurch gekennzeichnet, dass** die KI-Schnittstelle (20) Daten einschließlich Metadaten aus den von dem mindestens einen KI-Dienstleistungsprogramm (30a, 30b, 30c) erhaltenen Informationen (32) erstellt und in Form von Informationen (33) an den Konferenzserver (10) übermittelt, wobei die Daten aus der folgenden Gruppe stammen:
a) Zeitstempel, an welcher Stelle die besagten Informationen vom Konferenzserver (10) in den ersten Einzelstrom (15) einzufügen sind;
b) Position und Größe der vom Konferenzserver (10) in den ersten Einzelstrom (15) einzufügenden Informationen;
c) Dauer und Zeitfenster der vom Konferenzserver (10) in den ersten Einzelstrom (15) einzufügenden Informationen;
d) Text oder Metadaten, beispielsweise ein Weblink, der vom Konferenzserver (10) in den ersten Einzelstrom (15) einzufügenden Informationen;
e) Bild der vom Konferenzserver (10) in den ersten Einzelstrom (15) einzufügenden Informationen, beispielsweise als URL oder Stream;
f) Sprache der vom Konferenzserver (10) in den ersten Einzelstrom (15) einzufügenden Informationen, beispielsweise als URL oder Stream;
g) Dauer einer Visualisierung der vom Konferenzserver (10) in den ersten Einzelstrom (15) einzufügenden Informationen;
h) Angabe, ob die vom Konferenzserver (10) in den ersten Einzelstrom (15) einzufügenden Informationen sichtbar sind oder nicht, beispielsweise nur zum Zwecke der Aufzeichnung.

5. Verfahren nach mindestens einem der vorhergehenden Ansprüche,
**dadurch gekennzeichnet, dass** die KI-Schnittstelle (20) eine visuelle Darstellung oder eine Sprachnachricht auf Grundlage der Metadaten an den Konferenzserver (10) übermittelt, die auf den Teilnehmer-Endgeräten (40) ausgegeben werden.

6. Verfahren nach mindestens einem der vorhergehenden Ansprüche,
**dadurch gekennzeichnet, dass** der Konferenzserver (10) zusätzlich zu dem ersten Einzelstrom (15) Zusatzinformationen (17) an die KI-Schnittstelle (20) sendet und die KI-Schnittstelle (20) diese Zusatzinformationen (17) an mindestens eines der KI-Dienstleistungsprogramme (30a, 30b, 30c) sendet, bei der die Zusatzinformationen (17) im Zusammenhang mit Informationen aus dem ersten Einzelstrom (15) verarbeitet werden und die resultierenden Informationen (32) an die KI-Schnittstelle (20) zurückgeschickt werden, woraufhin die KI-Schnittstelle (20) diese Informationen (32) oder aus ihnen abgeleitete Informationen an den Konferenzserver (10) weiterleitet, der diese dann, ggf. nach Weiterverarbeitung, in den zweiten Einzelstrom (35) einbaut.

7. Verfahren nach mindestens einem der vorhergehenden Ansprüche,
**dadurch gekennzeichnet, dass** die von dem mindestens einen KI-Dienstleistungsprogramm (30a, 30b, 30c) an die KI-Schnittstelle (20) gesendeten Informationen (32) ganz oder teilweise für die den zweiten Einzelstrom (35) empfangenden Teilnehmer sichtbar sind, teilweise sichtbar und teilweise versteckt oder ganz versteckt sind.

8. Verfahren nach mindestens einem der vorhergehenden Ansprüche,
**dadurch gekennzeichnet, dass** zusätzlich zum Übermitteln von Informationen (33) seitens der KI-Schnittstelle (20) an den Konferenzserver (10) diese Informationen oder ein Teil von ihnen mindestens einer anderen, als Software realisierten Anwendung (50) zur Verfügung gestellt werden, insbesondere einem Chatprogramm, einer Agenda, einem Kalender und/oder einem Adressbuch.

9. Verfahren nach mindestens einem der vorhergehenden Ansprüche,
**dadurch gekennzeichnet, dass** die KI-Schnittstelle (20) veranlasst, ob und wie besagte Informationen (33) an den Konferenzserver (10) übermittelt und/oder an mindestens eine andere Anwendung (50) nach Anspruch 8 gesendet werden.

10. Videokonferenzsystem mit mindestens einer Recheneinheit, die ausgebildet ist, ein Computer-implementiertes Verfahren gemäß einem oder mehreren der vorherigen Ansprüche durchzuführen.

11. Computerprogramm, das bei Ausführung durch eine Recheneinheit diese veranlasst, zumindest einen Teil der Verfahrensschritte eines Computer-implementierten Videokonferenz-Verfahrens gemäß einem oder mehreren der vorherigen Ansprüche auszuführen.

12. Computerlesbares Speichermedium, umfassend ein Computerprogramm, das bei Ausführung durch eine Recheneinheit diese veranlasst, zumindest einen Teil der Verfahrensschritte eines Computer-implementierten Videokonferenz-Verfahrens gemäß einem oder mehreren der vorherigen Ansprüche auszuführen.
